(19) **Europäisches Patentamt**
**European Patent Office**
**Office européen des brevets**

(11) **EP 4 354 907 B1**

(12) **EUROPEAN PATENT SPECIFICATION**

(45) Date of publication and mention
of the grant of the patent:
**01.07.2026 Bulletin 2026/27**

(21) Application number: **22845200.9**

(22) Date of filing: **13.07.2022**

(51) International Patent Classification (IPC):
*H04W 4/029* (2018.01)   *H04W 4/80* (2018.01)
*H04W 4/33* (2018.01)   *H04W 8/00* (2009.01)
*H04W 64/00* (2009.01)   *H04W 4/02* (2018.01)

(52) Cooperative Patent Classification (CPC):
**H04W 4/029; H04W 4/80; H04W 8/00; H04W 64/00;**
H04W 4/025; H04W 4/33

(86) International application number:
**PCT/CN2022/105418**

(87) International publication number:
**WO 2023/001035 (26.01.2023 Gazette 2023/04)**

(54) **POSITIONING METHOD AND RELATED DEVICE**

POSITIONIERUNGSVERFAHREN UND ZUGEHÖRIGE VORRICHTUNG

PROCÉDÉ DE POSITIONNEMENT ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2021 CN 202110821581**

(43) Date of publication of application:
**17.04.2024 Bulletin 2024/16**

(73) Proprietor: **Huawei Technologies Co., Ltd.
Longgang
Shenzhen, Guangdong 518129 (CN)**

(72) Inventor: **CHEN, Xinbiao
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2016/202796    WO-A1-2020/081265
CN-A- 110 460 981    CN-A- 110 650 439
CN-A- 111 143 419    CN-A- 112 312 319
US-A1- 2014 111 307    US-A1- 2016 100 282
US-A1- 2021 029 496    US-A1- 2022 329 974
US-A1- 2022 360 942

**Description**

**CROSS-REFERENCE TO RELATED APPLICATIONS**

**TECHNICAL FIELD**

This application relates to the field of computer technologies, and in particular, to a locating method and a related device.

**BACKGROUND**

With popularization of electronic devices, more and more families have a plurality of electronic devices, such as mobile phones, Bluetooth watches, tablet computers, Bluetooth headsets, and computers. A Bluetooth function is integrated in these electronic devices. With integration and miniaturization of chips, electronic devices are smaller and lighter. As a result, overall sizes of electronic devices are small. When an electronic device is lost somewhere in a home, family members need to spend a large amount of time and energy in searching, which is time- and labor-consuming and not efficient.

The conventional technology includes the following three solutions: Solution 1 is based on a call function between electronic devices. In Solution 1, a user determines a location of a to-be-searched-for electronic device based on a ringtone generated during a call between electronic devices. In Solution 2, a to-be-searched-for electronic device is located by using a GPS module configured in an electronic device. In Solution 3, a Bluetooth connection is established between two electronic devices, and a distance between the two electronic devices is determined by using a Bluetooth signal, so that a location of a to-be-searched-for electronic device is determined.

However, the solutions in the conventional technology have the following problems: Solution 1 is applicable only to an electronic device having a call function. However, when the electronic device does not have a call function or when the electronic device has a call function but the electronic device is in a muted state or do-not-disturb state, Solution 1 is not applicable. If the GPS in Solution 2 has poor positioning precision, Solution 2 is not applicable to searching for an electronic device in a small area in a home. In Solution 3, when a Bluetooth connection cannot be established between an electronic device used by a user and a to-be-searched-for electronic device due to a long distance between the electronic device and the to-be-searched-for electronic device, Solution 3 is also not applicable.

WO 2020/081265 A1 discloses a method of locating a key that includes sending a notification to a plurality of mobile devices, the notification configured to initiate, at the mobile devices, a scanning operation for the key; receiving reply messages from the mobile devices, at least one reply message including a key identifier, a signal strength and a location of the mobile device; and determining, from the reply messages, a location of the key.

CN 110 460 981 A teaches, amongst others, that a server receives a search request that includes a first location and an identifier of a Bluetooth device and that is sent by a first terminal; within a first time period, determines at least one second terminal by using a first frequency and a first density in a first search range, and sends a search task that carries the identifier to the at least one second terminal.

CN 112 312 319 A teaches a device positioning method, a terminal, a server and a storage medium, wherein after a target device is disconnected, a main device sends help seeking information to the server, the server receives the help seeking information and then sends an assistance positioning instruction to an assistance terminal to enable the assistance terminal to scan surrounding devices, whether the scanned identification information is matched with the identification information in the assistance positioning instruction is determined, and if the scanned identification information is matched with the identification information in the assistance positioning instruction, the assistance terminal sends positioning information of the assistance terminal at the successful scanning moment to the main device.

US2021/029496 A1 discloses that a server may receive a request from a remote device to wirelessly locate an object that includes a wireless identification device. The server may also instruct one or more wireless-search enabled devices, comprising a predefined requestor network of devices, to attempt to locate the object. The server may further receive responses from the one or more devices in the network reporting results of attempts to locate the object and notify the remote device of at least one result.

**SUMMARY**

Embodiments of this application disclose a locating method and a related device, to implement quickly locating and searching for an electronic device based on Bluetooth. The invention is defined in the independent claims with advantageous embodiments being defined in the dependent claims.

A first aspect of this application discloses a locating system. The locating system includes a control center and a plurality of electronic devices, and all the plurality of electronic devices may communicate with the control center.

A first electronic device in the plurality of electronic devices is configured to: generate an instruction for assisting in searching and send the instruction for assisting in searching to the control center.

The control center is configured to: receive the instruction for assisting in searching sent by the first electronic device, generate a first instruction for searching based on the instruction for assisting in searching, and send the first instruction for searching to at least one second electronic device in the plurality of electronic devices.

The second electronic device is configured to: receive the first instruction for searching, and perform a Bluetooth scanning operation based on the first instruction for searching to scan for a to-be-searched-for electronic device, where both the second electronic device and the to-be-searched-for electronic device have a Bluetooth function.

The control center is further configured to send a searching response to the first electronic device, where the searching response is obtained based on the Bluetooth scanning operation of the second electronic device.

The first electronic device is further configured to: receive the searching response, and obtain, based on the searching response, location information of the to-be-searched-for electronic device.

In this way, the instruction for assisting in searching is sent to the control center by using the first electronic device, to enable the control center to send the first instruction for searching to the second electronic device, so that the Bluetooth scanning operation is performed by using the second electronic device to search for the to-be-searched-for electronic device. In addition, a location of the to-be-searched-for electronic device is obtained based on the searching response that is obtained through the Bluetooth scanning operation of the second electronic device. Another electronic device assists in searching for the to-be-searched-for electronic device, to improve a Bluetooth locating range and locating efficiency of an electronic device, so that the to-be-searched-for electronic device is quickly located and found by searching.

In some implementations of the first aspect, the second electronic device is further configured to: obtain a scanning result based on the Bluetooth scanning operation, determine, based on the scanning result, the location information of the to-be-searched-for electronic device, generate the searching response based on the location information, and send the searching response to the control center, where the searching response includes the location information;

the second electronic device is further configured to: obtain a scanning result based on the Bluetooth scanning operation, and send the scanning result to the control center, and
the control center is further configured to: determine, based on the scanning result, the location information of the to-be-searched-for electronic device, and generate the searching response based on the location information, where the searching response includes the location information; or
the second electronic device is further configured to: obtain a scanning result based on the Bluetooth scanning operation, and send the scanning result to the control center,
the control center is further configured to generate the searching response based on the scanning result, where the searching response includes the scanning result, and
the first electronic device is further configured to determine, based on the scanning result, the location information of the to-be-searched-for electronic device.

In this way, the location information of the to-be-searched-for electronic device may be calculated and determined by using the first electronic device, the second electronic device, or the control center in different application scenarios.

In the first aspect, the instruction for assisting in searching includes first identification information of the to-be-searched-for electronic device, and the control center is further configured to: generate the first instruction for searching based on the first identification information, and send the first instruction for searching to the second electronic device.

In some implementations of the first aspect, the instruction for assisting in searching further includes second identification information of the second electronic device, and the control center is configured to: determine, based on the second identification information, the second electronic device to which the first instruction for searching is sent and send the first instruction for searching to the second electronic device to which the first instruction for searching is sent.

In this way, the control center quickly sends the first instruction for searching to the specified second electronic device by using the second identification information in the instruction for assisting in searching, to implement quickly searching.

In some implementations of the first aspect, the first electronic device is further configured to: generate a second instruction for searching, and send the second instruction for searching to a third electronic device in the plurality of electronic devices within a Bluetooth scanning range of the first electronic device.

The third electronic device is further configured to: receive the second instruction for searching sent by the first electronic device, and scan and search, based on the second instruction for searching, for the to-be-searched-for electronic device through Bluetooth.

In this way, the instruction for assisting in searching is transmitted between electronic devices, to implement searching for the to-be-searched-for electronic device in a continuous area.

In some implementations of the first aspect, the locating system includes at least two third electronic devices, and after receiving the second instruction for searching sent by the first electronic device, one of the third electronic devices is further configured to send the second instruction for searching to another third electronic device within the Bluetooth scanning range of the third electronic device.

In this way, the instructions for searching are transmitted between the plurality of third electronic devices, to implement searching for the to-be-searched-for electronic device in a continuous area.

In some implementations of the first aspect, the control center stores the first identification information of the to-be-searched-for device, and the first electronic device is further configured to send a query request to the control center, to query the first identification information of the to-be-searched-for electronic device.

The control center is further configured to: generate a query response based on the received query request, and send the query response to the first electronic device, where the query response includes the first identification information of the to-be-searched-for electronic device.

The first electronic device is further configured to receive the query response sent by the control center.

In this way, the identification information of the to-be-searched-for device is obtained by using the query request, and the instruction for assisting in searching may be generated based on the identification information, to implement quickly and accurately searching for a corresponding electronic device.

In the first aspect, the control center stores a family account, the family account includes a plurality of subaccounts, each subaccount is associated with at least one electronic device, and the instruction for assisting in searching further includes a family account and a subaccount.

In this way, that one electronic device associated with the subaccount implements, by using the family account and the subaccounts in the instruction for assisting in searching, quickly searching, through Bluetooth, for another electronic device associated with the subaccount of the family account is implemented by using the family account and the subaccounts that are stored in the control center.

In some implementations of the first aspect, the scanning result includes Bluetooth signal strength between the to-be-searched-for electronic device and the second electronic device and second identification information of the second electronic device, and the determining, based on the scanning result, the location information of the to-be-searched-for electronic device includes:

  determining, based on the Bluetooth signal strength, distance information between the to-be-searched-for electronic device and the second electronic device; and
  determining the location information based on the second identification information and the distance information.

In this way, any one of the first electronic device, the second electronic device, and the control center may calculate, by using the Bluetooth signal strength, a distance between the to-be-searched-for electronic device and the second electronic device, so that the location of the to-be-searched-for electronic device is determined by using the distance.

In some implementations of the first aspect, the location information includes a distance between the second electronic device and the to-be-searched-for electronic device.

In some implementations of the first aspect, the first electronic device is further configured to: when the to-be-searched-for electronic device is found through scanning, determine Bluetooth signal strength between the to-be-searched-for electronic device and the first electronic device, and determine a second change feature of a distance between the first electronic device and the to-be-searched-for electronic device based on a first change feature that is of the Bluetooth signal strength and that is within a preset time period.

In some implementations of the first aspect, the first electronic device is further configured to generate prompt information based on the second change feature.

A second aspect of this application provides a locating method, applied to a first electronic device in a locating system. The locating system further includes a control center, and the method includes:

  sending an instruction for assisting in searching to the control center, to enable the control center to control, based on the instruction for assisting in searching, a second electronic device in the locating system to perform a Bluetooth scanning operation to scan for a to-be-searched-for electronic device; and receiving a searching response sent by the control center, and obtaining, based on the searching response, location information of the to-be-searched-for electronic device, where the searching response is obtained based on the Bluetooth scanning operation of the second electronic device.

In some implementations of the second aspect, the searching response includes a scanning result obtained by the second electronic device by performing the Bluetooth scanning operation, and the obtaining, based on the searching response, location information of the to-be-searched-for electronic device includes:
determining, based on the scanning result, the location information of the to-be-searched-for electronic device.

In some implementations of the second aspect, the location information includes a distance between the second electronic device and the to-be-searched-for electronic device.

In the second aspect, the instruction for assisting in searching includes first identification information of the to-be-searched-for electronic device.

In some implementations of the second aspect, the method further includes:

  generating a second instruction for searching; and
  sending the second instruction for searching to the second electronic device within a Bluetooth scanning range, to enable the second electronic device to scan and search, based on the second instruction for searching, for the to-be-searched-for electronic device through Bluetooth.

In some implementations of the second aspect, the control center stores the first identification information of the to-be-searched-for device, and the method further includes:

sending a query request to the control center, to query the first identification information of the to-be-searched-for electronic device; and
receiving a query response sent by the control center, where the query response includes the first identification information of the to-be-searched-for electronic device.

In the second aspect, the control center stores a family account, the family account includes a plurality of subaccounts, each subaccount is associated with at least one electronic device, and the instruction for assisting in searching further includes a family account and a subaccount.

In some implementations of the second aspect, the scanning result includes Bluetooth signal strength of the to-be-searched-for electronic device and second identification information of the second electronic device, and the determining, based on the scanning result, the location information of the to-be-searched-for electronic device includes:

determining, based on the Bluetooth signal strength, distance information between the to-be-searched-for electronic device and the second electronic device; and
determining the location information based on the second identification information and the distance information.

A non-claimed third aspect of this application provides a locating method, applied to a control center of a locating system. The locating system further includes a plurality of electronic devices, and the method includes:

receiving an instruction for assisting in searching sent by a first electronic device in the plurality of electronic devices, generating a first instruction for searching based on the instruction for assisting in searching, and sending the first instruction for searching to at least one second electronic device in the plurality of electronic devices, to enable the second electronic device to perform a Bluetooth scanning operation to scan for a to-be-searched-for electronic device; and
sending a searching response to the first electronic device, where the searching response is obtained based on the Bluetooth scanning operation of the second electronic device, to enable the first electronic device to obtain, based on the searching response, location information of the to-be-searched-for electronic device.

In some implementations of the third aspect, before the sending a searching response to the first electronic device, the method further includes:

receiving a scanning result sent by the second electronic device, where the scanning result is obtained by the second electronic device based on the Bluetooth scanning operation, and
determining the location information of the to-be-searched-for electronic device based on the scanning result, and generating the searching response based on the location information, where the searching response includes the location information; or
receiving a scanning result sent by the second electronic device, where the scanning result is obtained by the second electronic device based on the Bluetooth scanning operation, and
forming the searching response based on the scanning result, where the searching response includes the scanning result.

In some implementations of the third aspect, the instruction for assisting in searching includes first identification information of the to-be-searched-for electronic device, and the generating a first instruction for searching based on the instruction for assisting in searching includes:
generating the first instruction for searching based on the first identification information.

In some implementations of the third aspect, the instruction for assisting in searching further includes second identification information of the second electronic device, and the method further includes:
determining the second electronic device based on the second identification information.

In some implementations of the third aspect, the control center stores the first identification information of the to-be-searched-for device, and the method further includes:

receiving a query request sent by the first electronic device; and
generating a query response based on the received query request, and sending the query response to the first electronic device, where the query response includes the first identification information of the to-be-searched-for electronic device.

In some implementations of the third aspect, a family account includes a plurality of subaccounts, each subaccount includes at least one electronic device, and the instruction for assisting in searching further includes a family account and a subaccount.

In some implementations of the third aspect, the scanning result includes Bluetooth signal strength between the to-be-searched-for electronic device and the second electronic device and second identification information of the second electronic device, and the method further includes:

> determining, based on the Bluetooth signal strength, distance information between the to-be-searched-for electronic device and the second electronic device; and
> determining the location information based on the second identification information and the distance information.

A non-claimed fourth aspect provides a locating method, applied to an electronic device in a locating system, and the method includes:

> receiving a first instruction for searching, where the first instruction for searching instructs the electronic device to search for a to-be-searched-for electronic device;
> performing a Bluetooth scanning operation based on the first instruction for searching to scan for the to-be-searched-for electronic device; and
> returning a searching response to the first instruction for searching based on a scanning result of the Bluetooth scanning operation.

In some implementations of the fourth aspect, the locating system further includes a control center, and the first instruction for searching is received from the control center; or the locating system further includes another electronic device, and the first instruction for searching is received from the another electronic device.

In some implementations of the fourth aspect, the locating method further includes:

The searching response includes the scanning result, and the method further includes:
determining, based on the scanning result, location information of the to-be-searched-for electronic device.

In some implementations of the fourth aspect, the scanning result includes Bluetooth signal strength between the to-be-searched-for electronic device and the second electronic device and second identification information of the second electronic device, and the method further includes:

> determining, based on the Bluetooth signal strength, distance information between the to-be-searched-for electronic device and the second electronic device; and
> determining the location information based on the second identification information and the distance information.

A non-claimed fifth aspect of this application provides a locating method, applied to a locating system. The locating system includes a control center and a plurality of electronic devices. All the plurality of electronic devices may communicate with the control center. The method includes:

A first electronic device in the plurality of electronic devices generates an instruction for assisting in searching, and sends the instruction for assisting in searching to the control center.

The control center receives the instruction for assisting in searching sent by the first electronic device, generates a first instruction for searching based on the instruction for assisting in searching, and sends the first instruction for searching to at least one second electronic device in the plurality of electronic devices.

The second electronic device receives the first instruction for searching, and executes a Bluetooth scanning operation based on the first instruction for searching to scan for a to-be-searched-for electronic device, where both the second electronic device and the to-be-searched-for electronic device have a Bluetooth function.

The control center sends a searching response to the first electronic device, where the searching response is obtained based on the Bluetooth scanning operation of the second electronic device.

The first electronic device receives the searching response, and obtains, based on the searching response, location information of the to-be-searched-for electronic device.

In some implementations of the fifth aspect, the method further includes:

The second electronic device obtains a scanning result based on the Bluetooth scanning operation, determines, based on the scanning result, the location information of the to-be-searched-for electronic device, generates the searching response based on the location information, and sends the searching response to the control center, where the searching response includes the location information;

> the second electronic device obtains a scanning result based on the Bluetooth scanning operation, and sends the scanning result to the control center, and
> the control center determines, based on the scanning result, the location information of the to-be-searched-for electronic device, and generates the searching response based on the location information, where the searching response includes the location information; or
> the second electronic device obtains a scanning result based on the Bluetooth scanning operation, and sends the scanning result to the control center, the control center generates the searching response based on the scanning result, where the searching response includes the scanning result, and the first electronic device determines, based on the scanning result in the searching response, the location information of the to-be-searched-for electronic device.

In some implementations of the fifth aspect, the method further includes:

The instruction for assisting in searching includes first identification information of the to-be-searched-for electronic device, and the control center generates the first instruction for searching based on the first identification information, and sends the first instruction for searching to the second electronic device.

In some implementations of the fifth aspect, the method further includes:

The instruction for assisting in searching further includes second identification information of the second electronic device, and the control center determines the second electronic device based on the second identification information and sends the first instruction for searching to the second electronic device.

In some implementations of the fifth aspect, the control center stores the first identification information of the to-be-searched-for device, and the method further includes:

The first electronic device sends a query request to the control center, to query the first identification information of the to-be-searched-for electronic device;

the control center generates a query response based on the received query request, and sends the query response to the first electronic device, where the query response includes the first identification information of the to-be-searched-for electronic device; and

the first electronic device receives the query response sent by the control center.

In some implementations of the fifth aspect, the control center stores a family account, the family account includes a plurality of subaccounts, each subaccount includes at least one electronic device, and the instruction for assisting in searching further includes a family account and a subaccount.

In some implementations of the fifth aspect, the scanning result includes Bluetooth signal strength between the to-be-searched-for electronic device and the second electronic device and second identification information of the second electronic device, and the determining, based on the scanning result, the location information of the to-be-searched-for electronic device includes:

determining, based on the Bluetooth signal strength, distance information between the to-be-searched-for electronic device and the second electronic device; and

determining, by the control center, the location information based on the second identification information and the distance information.

In some implementations of the fifth aspect, the location information includes a distance between the second electronic device and the to-be-searched-for electronic device.

In some implementations of the fifth aspect, the method further includes:

When the to-be-searched-for electronic device is found through scanning, the first electronic device determines Bluetooth signal strength between the to-be-searched-for electronic device and the first electronic device, and determines a second change feature of a distance between the first electronic device and the to-be-searched-for electronic device based on a first change feature that is of the Bluetooth signal strength and that is within a preset time period.

In some implementations of the fifth aspect, the method further includes:

The first electronic device generates prompt information based on the second change feature.

A non-claimed sixth aspect of this application provides a locating method, applied to a locating system. The locating system includes a plurality of electronic devices, and the method includes:

A first electronic device in the plurality of electronic devices is further configured to: generate a second instruction for searching, and send the second instruction for searching to a third electronic device in the plurality of electronic devices within a Bluetooth scanning range of the first electronic device.

The third electronic device is further configured to: receive the second instruction for searching sent by the first electronic device, and scan and search, based on the second instruction for searching, for the to-be-searched-for electronic device through Bluetooth.

In some implementations of the sixth aspect, after one of the third electronic devices receives the second instruction for searching sent by the first electronic device, the method further includes:

sending the second instruction for searching to another third electronic device within the Bluetooth scanning range of the third electronic device.

A seventh aspect of this application provides a computer-readable storage medium that includes computer instructions. When the computer instructions are run on an electronic device, the electronic device is enabled to perform the locating method according to any one of the foregoing embodiments.

An eighth aspect of this application provides an electronic device. The electronic device includes a processor and a memory. The memory is configured to store instructions, and the processor is configured to invoke the instructions in the memory, to enable the first electronic device to perform the locating method according to the foregoing embodiments.

A non-claimed ninth aspect of this application provides a control device. The electronic controller includes a processor and a memory. The memory is configured to store instructions, and the processor is configured to invoke the instructions in the memory, to enable the control device to perform the locating method according to the foregoing embodiments.

A non-claimed tenth aspect of this application provides an electronic device. The electronic device includes a processor and a memory. The memory is configured to store instructions, and the processor is configured to invoke the instructions in the memory, to enable the second electronic device to perform the locating method according to the foregoing embodiments.

It should be understood that the locating method according to the second aspect to the sixth aspect, the computer-readable storage medium according to the seventh aspect, the electronic device according to the eighth aspect and the tenth aspect, and the control device according to the ninth aspect are corresponding to the locating system according to the first aspect. Therefore, for beneficial effects that can be achieved by the locating method, the computer-readable storage medium, the electronic device, and the control device, refer to the beneficial effects in the corresponding method provided above. Details are not described herein again.

## BRIEF DESCRIPTION OF DRAWINGS

FIG. 1 is a schematic diagram of a structure of a locating system disclosed in an embodiment of this application;

FIG. 2 is a schematic diagram of an application scenario of a locating system disclosed in an embodiment of this application;

FIG. 3 is a schematic flowchart of a locating method disclosed in an embodiment of this application;

FIG. 4 is a schematic diagram of a structure of a first electronic device disclosed in an embodiment of this application;

FIG. 5 is a schematic diagram of a structure of a to-be-searched-for electronic device disclosed in an embodiment of this application; and

FIG. 6 is a schematic diagram of a structure of a control device disclosed in an embodiment of this application.

## DESCRIPTION OF EMBODIMENTS

For ease of understanding, descriptions of some concepts related to embodiments of this application are provided as examples for reference, as shown in the following:

It should be noted that, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In this specification, claims, and accompanying drawings of this application, terms "first", "second", "third", "fourth", and the like (if exist) are intended to distinguish between similar objects but do not necessarily indicate a specific order or sequence.

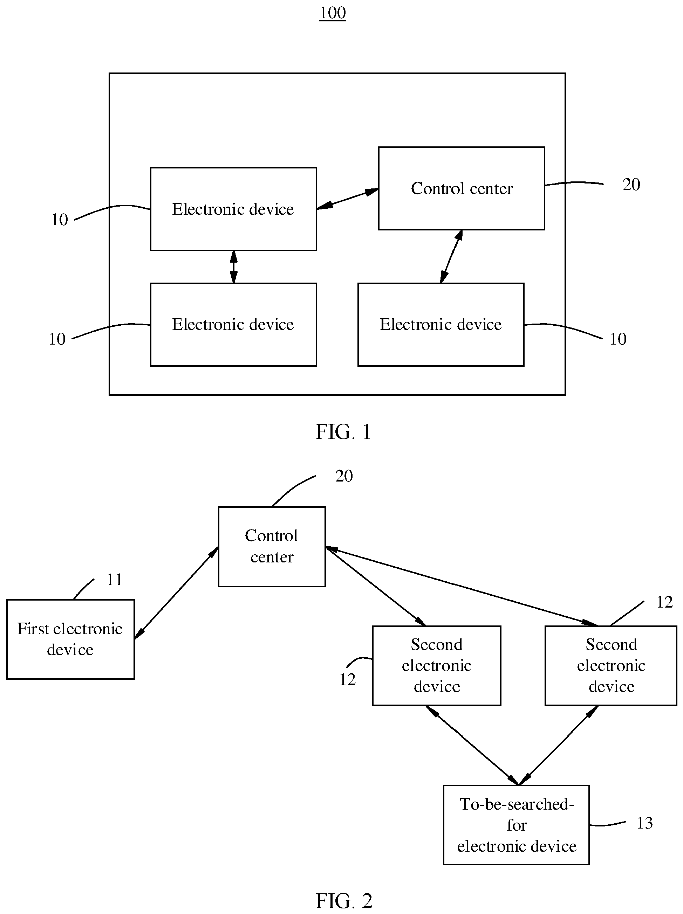

FIG. 1 is a schematic diagram of a structure of a Bluetooth-based locating system according to an embodiment of this application. The locating system 100 includes a control center 20 and a plurality of electronic devices 10. An instruction for searching is sent to the control center 20 by using one of the electronic devices, the control center 20 sends the instruction for searching to another electronic device 10, and the another electronic device scans, through Bluetooth, for a to-be-searched-for electronic device. The control center 20 cooperates with the another electronic device, to implement quickly locating the to-be-searched-for electronic device and quickly searching for the electronic device.

Specifically, all electronic devices that perform a Bluetooth scanning operation in the plurality of electronic devices 10 have a Bluetooth function, for example, a mobile phone, a tablet, a watch, a headset, and a notebook computer that have a Bluetooth function. The plurality of electronic devices 10 may implement short-range communication through Bluetooth. It may be understood that different electronic devices have different capabilities. Therefore, some electronic devices 10, for example, a mobile phone, a tablet, and a notebook computer, may communicate with the control center 20, and may communicate with the control center 20 by using an IP network or a mobile network.

The control center 20 may be a server on a network side of the Internet. Certainly, the control center 20 may alternatively be a device in a home network, for example, a router.

In some embodiments, the locating system 100 further includes an electronic device that cannot communicate with the control center 20, for example, a Bluetooth headset.

FIG. 1 shows only three electronic devices 10. It may be understood that a quantity of electronic devices 10 is not limited in this application, and the locating system 10 may include three, four, or more electronic devices 10.

As shown in FIG. 2, for better understanding of embodiments of this application, in this application, a plurality of electronic devices 10 are divided into a first electronic device 11, at least one second electronic device 12, and at least one to-be-searched-for electronic device 13. All the second electronic devices 12 and the to-be-searched-for electronic device 13 may communicate with each other through Bluetooth.

The first electronic device 11 is an electronic device that is first used by a user to initiate searching, the to-be-searched-for electronic device 13 is an electronic device to be searched for by the user, and both the second electronic device 12 and the first electronic device 11 may communicate with a control center 20.

It may be understood that, in another embodiment, the electronic devices further include a third electronic device, and the third electronic device may directly communicate with a first electronic device, for example, the third electronic device receives instructions sent by the first electronic device. Certainly, a plurality of third electronic devices are configured in a manner in which the plurality of third electronic devices may further communicate with each other, for example, one of the third electronic devices sends a received instruction to another third electronic device.

In an embodiment, the first electronic device 11 has a Bluetooth function and scans and searches for the to-be-searched-for electronic device 13 by sending a Bluetooth signal. When the to-be-searched-for electronic device 13 is not detected within a scanning range of the first electronic device 11, the first electronic device 11 is configured to: generate an instruction for assisting in searching and send the instruction for assisting in searching to the control center 20.

In another embodiment, when the first electronic device 11 does not have a Bluetooth function or a Bluetooth function is faulty and the user wants to search for the to-be-searched-for electronic device 13 by using the first electronic device 11, the first electronic device 11 generates an instruction for assisting in searching in response to an operation indication of the user, and sends the instruction for assisting in searching to the control center 20.

Further, the control center 20 is configured to: receive the instruction for assisting in searching sent by the first electronic device 11, generate a first instruction for searching based on the instruction for assisting in searching, and send the first instruction for searching to the at least one second electronic device 12.

The second electronic device 12 is configured to: receive the first instruction for searching, and perform a Bluetooth scanning operation based on the first instruction for searching to scan for the to-be-searched-for electronic device 13.

The control center 20 is further configured to send a searching response to the first electronic device 11, where the searching response is obtained based on the Bluetooth scanning operation of the second electronic device 12.

The first electronic device 11 is configured to: receive the searching response, and obtain, based on the searching response, location information of the to-be-searched-for electronic device.

In this way, the instruction for assisting in searching is sent to the control center 20 by using the first electronic device 11, to enable the control center 20 to send the first instruction for searching to the second electronic device 12, so that a Bluetooth signal is sent by using the second electronic device 12 to scan and search for the to-be-searched-for electronic device 13. The control center 20 sends the searching response to the first electronic device 11. The first electronic device 11 determines, based on the searching response, the location information of the to-be-searched-for electronic device 13, to improve a locating range and locating efficiency of an electronic device, so that the to-be-searched-for electronic device is quickly located and found.

In an embodiment, that the second electronic device 12 scans, based on the first instruction for searching, for the to-be-searched-for electronic device specifically includes:

The second electronic device 12 searches, by sending a Bluetooth signal, for all electronic devices that have a Bluetooth function near the second electronic device 12, and determines whether electronic devices within a scanning range include the to-be-searched-for electronic device 13.

In an embodiment, the second electronic device 12 scans, based on the first instruction for searching, for the to-be-searched-for electronic device. Regardless of whether the to-be-searched-for electronic device 13 exists within the scanning range of the second electronic device 12, the second electronic device 12 generates a scanning result based on the scanning operation. It may be understood that, in another embodiment, when the second electronic device 12 scans for and finds a corresponding to-be-searched-for electronic device 13 within the Bluetooth scanning range, the second electronic device 12 generates a scanning result based on the scanning operation. When the second electronic device 12 scans and does not find a corresponding to-be-searched-for electronic device 13 within the Bluetooth scanning range, the second electronic device 12 does not generate a scanning result, and when the control center 20 does not receive a scanning result sent by the second electronic device 12 within a preset time period, it is determined that the second electronic device 12 does not find the corresponding to-be-searched-for electronic device 13.

In an embodiment, the first electronic device 11 is configured to: generate the instruction for assisting in searching, and send the instruction for assisting in searching to the control center 20.

The control center 20 is configured to: receive the instruction for assisting in searching sent by the first electronic device 11, generate the first instruction for searching based on the instruction for assisting in searching, and send the first instruction for searching to the at least one second electronic device 12.

The second electronic device 12 is configured to: receive the first instruction for searching, and execute the Bluetooth scanning operation based on the first instruction for searching to scan for the to-be-searched-for electronic device.

The second electronic device 12 is further configured to: obtain a scanning result based on the Bluetooth scanning operation, determine, based on the scanning result, the location information of the to-be-searched-for electronic device, generate the searching response based on the location information, and send the searching response to the control center, where the searching response includes the location information.

Specifically, the second electronic device 12 determines, based on the scanning result, the location information of the to-be-searched-for electronic device 13, and sends the location information to the control center 20 by using the searching response, and the control center 20 sends the location information to the first electronic device 11 by using the searching response.

In another embodiment, the first electronic device 11 is configured to: send the instruction for assisting in searching to the control center 20, and send the instruction for assisting in searching to the control center 20.

The control center 20 is configured to: receive the instruction for assisting in searching sent by the first electronic device 11, generate the first instruction for searching based on the instruction for assisting in searching, and send the first instruction for searching to the at least one second electronic device 12.

The second electronic device 12 is configured to: receive the first instruction for searching, execute the Bluetooth scanning operation based on the first instruction for searching to scan for the to-be-searched-for electronic device 13, to generate the scanning result, and send the scanning result to the control center.

The control center 20 is configured to: receive the scanning result, determine, based on the scanning result, the location information of the to-be-searched-for electronic device 13, and generate the searching response based on the location information, and send the searching response to the first electronic device 11.

The first electronic device 11 receives the searching response sent by the control center 20, and obtains, based on the searching response, the location information of the to-be-searched-for electronic device 13.

Specifically, the second electronic device 12 sends the scanning result to the control center 20, and the control center 20 determines, based on the scanning result, the location information of the to-be-searched-for electronic device 13, and sends the location information to the first electronic device 11 by using the searching response.

In an embodiment, the first electronic device 11 is configured to: generate the instruction for assisting in searching, and send the instruction for assisting in searching to the control center 20.

The control center 20 is configured to: receive the instruction for assisting in searching sent by the first electronic device 11, generate the first instruction for searching based on the instruction for assisting in searching, and send the first instruction for searching to the at least one second electronic device 12.

The second electronic device 12 is configured to: receive the first instruction for searching, execute the Bluetooth scanning operation based on the first instruction for searching to scan for the to-be-searched-for electronic device, to generate the scanning result, and send the scanning result to the control center.

The control center 20 is configured to: receive the scanning result, generate the searching response based on the scanning result, and send the searching response to the first electronic device 11.

The first electronic device 11 receives the searching response sent by the control center 20, and determines, based on the scanning result in the searching response, the location information of the to-be-searched-for electronic device 13.

In this way, the instruction for assisting in searching is sent to the control center 20 by using the first electronic device 11, to enable the control center 20 to send the first instruction for searching to the second electronic device, so that a Bluetooth signal is sent by using the another second electronic device 12 to scan and search for the to-be-searched-for electronic device 13. The control center 20 sends the scanning result to the first electronic device 11 by using the searching response. The first electronic device 11 determines, based on the scanning result, the location of the to-be-searched-for electronic device 13, to improve a locating range and locating efficiency of an electronic device, so that the to-be-searched-for electronic device is quickly located and found.

It may be understood that the second electronic device 12, the control center 20, and the first electronic device 11 may all determine, based on the scanning result of the second electronic device 12, the location of the to-be-searched-for electronic device 13.

For example, a user uses a mobile phone to send a Bluetooth signal to scan and search for a headset, but the headset is not within a scanning range of the mobile phone. Therefore, the mobile phone does not find the headset through Bluetooth scanning. The user uses the mobile phone to send an instruction for assisting in searching to the control center. The control center generates a first instruction for searching based on the instruction for assisting in searching and sends the instruction for searching to the second electronic device. The second electronic device may be a tablet computer, a smart speaker, or the like. The second electronic device scans and searches for the headset by sending a Bluetooth signal. When the second electronic device finds the corresponding headset and sends a corresponding scanning result to the control center, the control center transmits the scanning result to the mobile phone, so that the mobile phone may determine a location of the headset based on the scanning result.

In an embodiment, the location information may be a specific location, that is, a distance between the to-be-searched-for electronic device 13 and the second electronic device 12. For example, if a television is placed in a corner of a living room, the headset is placed at a location five meters away from the television. Certainly, the location information may alternatively be an area, that is, a circumferential detecting area of the second electronic device, for example, a circular area with the television as a center and a radius of 5 meters.

Further, if a plurality of second electronic devices 12 do not find the to-be-searched-for electronic device 13, the plurality of second electronic devices 12 generate a scanning result, and send the scanning result to the control center 20. In this case, the control center 20 or the first electronic device 11 may calculate, based on the scanning result, the location information of the to-be-searched-for electronic device.

For example, a mobile phone sends, by using the control center, a first instruction for searching to a tablet computer placed in a living room and a smart speaker placed in a primary bedroom. The tablet computer and the smart speaker scan and search for a headset by sending Bluetooth information, but neither the tablet computer nor the smart speaker finds the headset through scanning. The tablet computer and the smart speaker send scanning results to the control center. The control center sends the scanning results to the mobile phone, and the mobile phone determines, based on the scanning results, that the headset is not in the primary bedroom and the living room.

In an embodiment, a Bluetooth function of the second electronic device 12 is disabled, and the second electronic device 12 is further configured to enable the Bluetooth function based on the first instruction for searching.

Optionally, the instruction for assisting in searching includes first identification information of the to-be-searched-for electronic device 13, and the first identification information is used to identify the to-be-searched-for electronic device.

In an embodiment, the first identification information includes a device name and a user account. After receiving the instruction for assisting in searching, the control center 20 determines, based on the first identification information, the corresponding to-be-searched-for electronic device 13, and generates the first instruction for searching based on the first identification information.

The device name may be a preset name of an electronic device, for example, HUAWEI P30, OPPO Reno, Redmi, or the like. The device name may alternatively be a user-defined name, for example, Zhang San or 110. The user account may be an account, for example, a Huawei account or a Xiaomi account, used by a user to log in to an electronic device.

It may be understood that, in another embodiment, the first identification information may alternatively be a device name and a device identifier. The device identifier may be a MAC address or an international mobile equipment identity (International Mobile Equipment Identity, IMEI) of a device. The device identifier is used to uniquely identify the device, and a user may determine, by using the device name, the to-be-searched device. Optionally, the instruction for assisting in searching further includes second identification information of the second electronic device 12, the control center 20 determines, based on the second identification information, the second electronic device 12 to which the first instruction for searching is to be sent, and the control center 20 is further configured to send the first instruction for searching to the second electronic device 12 that is corresponding to the second identification information and to which the first instruction for searching is to be sent.

The second identification information is used to uniquely identify the second electronic device 12.

In an embodiment, the second identification information includes a device name and account information. Certainly, in another embodiment, the second identification information may include a device name and a device identifier.

For example, a user uses a tablet computer to search for a sports band, but does not find the sports band within a Bluetooth signal scanning range of the tablet computer. The user enters an instruction to enable the tablet computer to generate the instruction for assisting in searching. The instruction for assisting in searching includes information about the sports band, information about a notebook computer, and information about a mobile phone. The control center generates the first instruction for searching based on the instruction for assisting in searching, and sends the first instruction for searching to the notebook computer and the mobile phone, to enable the mobile phone and the notebook computer to scan and search for the sports band by sending a Bluetooth signal.

In this way, the second identification information is carried in the instruction for assisting in searching, so that a device that assists in searching for the to-be-searched-for electronic device is limited to be the second electronic device to limit a searching range.

In an embodiment of this application, the third electronic device is within a Bluetooth scanning range of the first electronic device 11, and the first electronic device 11 finds the third electronic device through Bluetooth scanning. The first electronic device 11 is further configured to: generate a second instruction for searching and send the second instruction for searching to the third electronic device. The third electronic device is further configured to: receive the second instruction for searching, and scan and search, based on the second instruction for searching, for the to-be-searched-for electronic device 13 by sending a Bluetooth signal. The third electronic device is further configured to: generate a scanning result and send the scanning result to the first electronic device 11.

In another embodiment, the third electronic device is further configured to: receive the second instruction for searching, scan and search, based on the second instruction for searching, for the to-be-searched-for electronic device 13 by sending a Bluetooth signal, generate a scanning result, determine, based on the scanning result, the location information of the to-be-searched-for electronic device 13, and send the location information to the first electronic device 11.

For example, a user uses a mobile phone to send Bluetooth information to scan and search for a headset in a living room, and the mobile phone does not find the headset through Bluetooth scanning. However, the mobile phone finds a tablet computer placed in the living room through Bluetooth scanning. The mobile phone generates a second instruction for searching and sends the second instruction for searching to the tablet computer, to enable the tablet computer to scan and search, based on the second instruction for searching, for the headset by sending a Bluetooth signal.

In this way, an instruction for searching is sent, by using the first electronic device 11, to a third electronic device within a predetermined area (for example, within a Bluetooth signal range of the first electronic device 11), to enable the third electronic device to search for the to-be-searched-for electronic device 13 through Bluetooth scanning. At least one third electronic device jointly searches for the to-be-searched-for electronic device 13 through Bluetooth scanning, to improve a searching range of Bluetooth scanning, so that the to-be-searched-for electronic device 13 is quickly located and found.

Further, when scanning ranges of the first electronic device 11 and the third electronic device have an overlapping area, the first electronic device 11 sends the second instruction for searching to the third electronic device within the scanning range of the first electronic device 11. In this way, a scanning range of a plurality of electronic devices increases continuously. The plurality of electronic devices form a continuous scanning area, so that blind spots between scanning areas of the electronic devices are reduced.

In an embodiment, the locating system 100 includes at least two third electronic devices. After one of the third electronic devices receives the second instruction for searching sent by the first electronic device 11, the third electronic device is further configured to send the second instruction for searching to another electronic device, to enable a plurality of electronic devices to jointly assist in searching for the to-be-searched-for electronic device 13. The another electronic device may alternatively be the second electronic device.

For example, a user uses a mobile phone to send a Bluetooth signal to search for a headset, but the mobile phone does not find the headset through scanning. A tablet computer is within a Bluetooth scanning range of the mobile phone. The mobile phone sends a second instruction for searching to the tablet computer. After receiving the instruction, the tablet computer determines, through Bluetooth scanning, that there is a smart speaker within a scanning range of the tablet computer. The tablet computer is further configured to send the second instruction for searching to the smart speaker, to enable the smart speaker to scan and search, based on the second instruction for searching, for the headset by sending a Bluetooth signal.

In this way, the second instruction for searching is transmitted between the first electronic device 11 and the at least two third electronic devices, and the plurality of electronic devices jointly search for the to-be-searched-for electronic device 13 through Bluetooth scanning, to expand a range of the continuous scanning area.

It may be understood that, in another embodiment, the first electronic device 11 is further configured to send the instruction for assisting in searching to the third electronic device, and the third electronic device is further configured to: receive the instruction for assisting in searching, and send the instruction for assisting in searching to the control center 20.

For example, a user uses a mobile phone to search for a headset, but the mobile phone does not find the headset. The user uses the mobile phone to send the instruction for assisting in searching to the control center 20. However, because data traffic of the mobile phone is disabled or another fault occurs, the mobile phone cannot use a data network, and the mobile phone cannot establish a communication connection to the control center 20. The mobile phone finds a smart speaker through Bluetooth scanning, and sends the instruction for assisting in searching to the smart speaker. The smart speaker sends the received instruction for assisting in searching to the control center 20. The control center 20 generates a first instruction for searching based on the received instruction for assisting in searching, and sends the first instruction for searching to at least one second electronic device 12, to enable the second electronic device 12 to scan, through Bluetooth and based on the instruction for assisting in searching, for a to-be-searched-for electronic device 13.

In an embodiment, the control center 20 stores the first identification information of the to-be-searched-for electronic device 13, and the first electronic device 11 is further configured to send a query request to the control center 20, to search for the first identification information of the to-be-searched-for electronic device 13.

The control center 20 is further configured to: generate a query response based on the received query request, and send the query response to the first electronic device 11, where the query response includes the first identification information of the to-be-searched-for electronic device 13.

The first electronic device 11 is further configured to receive the query response sent by the control center.

It may be understood that the query request sent by the first electronic device 11 to the control center 20 may be used to obtain identification information of one or more electronic devices.

Certainly, the first electronic device 11 may alternatively query identification information of all electronic devices corresponding to the locating system 100 by using the query request, and the identification information may include at least one of the first identification information of the to-be-searched-for electronic device 13, the second identification information of the second electronic device 12, and third identification information of the first electronic device 11.

In an embodiment, the identification information includes a user account and a device name. For example, identification information of a mobile phone includes a Huawei account of a user and a device name HUAWEI P30.

For example, a user uses a mobile phone to search for a headset, but the mobile phone and the headset are unpaired, and the mobile phone does not store identification information of the headset. The mobile phone sends a query request to the control center to obtain identification information of all electronic devices. The user may determine the identification information of the headset from the identification information of all the electronic devices, generate an instruction for assisting in searching based on the identification information of the headset, and send the instruction for assisting in searching to the control center 20.

In this way, the first electronic device 11 sends the query request to the control center 20 to obtain the identification information of the to-be-searched-for electronic device 13, the first electronic device 11 generates the instruction for assisting in searching based on the identification information, sends the instruction for assisting in searching to the control center 20, and sends an instruction for searching to another electronic device by using the control center 20, so that the to-be-searched-for electronic device is quickly located and found.

In an embodiment, the first electronic device 11 is further configured to generate a first creating request, and the control center 20 is further configured to create a family account based on the received first creating request. It may be understood that, in another embodiment, a user may alternatively create a family account by using the second electronic device 12. Certainly, the user may alternatively create a family account directly by using the control center 20. For example, the user enters an instruction by using a display or an input device of the control center, and the control center 20 responds to the instruction entered by the user, to create the family account. The family account may be a user account, for example, an account used by the user to log in to a Huawei system. Certainly, the family account may alternatively be a mobile phone number. Each family account has a plurality of subaccounts, and the plurality of subaccounts of each family account may assist in searching by using the control center. The subaccount may be a user account or mobile phone number.

For example, a father uses his own Huawei account to create a family account, and a child and a mother use their own Huawei accounts to create subaccounts of the family account. Both a subaccount of the father and the family account are Huawei accounts.

Further, the control center 20 stores a family account, the family account includes a plurality of subaccounts, each subaccount is associated with a plurality of electronic devices, and the instruction for assisting in searching further includes a family account and a subaccount. It may be understood that each user may have a plurality of family accounts. For example, a father, a mother, and a child form a family account A, and the father, a colleague A, and a colleague B form a family account B. In this way, the control center 20 determines, based on the family account in the instruction for assisting in searching, a range to which the to-be-searched-for electronic device belongs. For example, if the to-be-searched-for electronic device belongs to the family account B, the instruction for assisting in searching includes the family account B, and the control center determines, based on the subaccount in the instruction for assisting in searching, a corresponding to-be-searched-for electronic device. For example, a subaccount C of the mother is associated with a Bluetooth headset A, a subaccount D of the father is associated with a Bluetooth headset B, and the father wants to search for the Bluetooth headset A through Bluetooth. In this case, the instruction for assisting in searching includes the subaccount C, and the control center determines, based on the subaccount C, a corresponding to-be-searched-for electronic device.

It may be understood that, in some embodiments, each of the first identification information of the to-be-searched-for electronic device, the second identification information of the second electronic device, and the third identification information of the first electronic device may include only a device name, and the control center 20 may uniquely determine, based on the family account, the subaccount, and the device name in the instruction for assisting in searching, a corresponding to-be-searched-for electronic device.

For example, a subaccount of a child may be associated with a phone watch, a tablet computer, or the like.

In this way, each subaccount may include identification information of at least one electronic device, and the identification information is used to identify an electronic device associated with the subaccount, for example, the first identification information of the to-be-searched-for electronic device.

Optionally, the control center is further configured to: receive a second creating request sent by the first electronic device or the second electronic device, and create a subaccount of the family account based on the second creating request, where the second creating request includes any one of the first identification information of the to-be-searched-for electronic device, the second identification information of the second electronic device, and the third identification information of the first electronic device.

Specifically, the subaccount may be created by using the creating request. Certainly, the user may further add an electronic device to the subaccount by using the creating request sent by the electronic device.

For example, a child has a subaccount of a family account, but the subaccount includes only a telephone watch. The child may send a creating request by using an electronic device, and the creating request includes the subaccount and a name of a headset, to add the headset to the subaccount of the child.

Further, an account of each family may belong to a plurality of family accounts, the second creating request further includes the family account, and the control center determines, based on the family account in the second creating request, a family account to which the created subaccount belongs.

In this way, the family account is created, so that device information of the plurality of electronic devices corresponding to the family account may be stored in the control center. One of the electronic devices sends an assistance query request to the control center, and a control instruction (for example, a first instruction for searching) is sent to another electronic device corresponding to the family account by using the control center, so that a plurality of other electronic devices corresponding to the family account jointly assist in searching for a lost electronic device, to improve a speed of locating and searching for the to-be-searched-for electronic device.

In an embodiment, the scanning result includes the second identification information of the second electronic device, and Bluetooth signal strength between the second electronic device and the to-be-searched-for electronic device, and the first electronic device 11 is further configured to:

> determine, based on the Bluetooth signal strength, distance information between the to-be-searched-for electronic device and the second electronic device; and
> determine the location information based on the second identification information and the distance information.

Specifically, the Bluetooth signal strength may be a received signal strength indication (Received Signal Strength Indication, RSSI) value obtained when the second electronic device interacts with the to-be-searched-for electronic device, and the distance information may be calculated by using a fading model of the RSSI value and a distance. The distance information is a distance between the second electronic device and the to-be-searched-for electronic device.

In an embodiment, the distance information may be calculated based on the following formula:

$$d = 10^{(\text{abs}(\text{RSSI}) - a / (10 * n))}.$$

d is the distance between the second electronic device and the to-be-searched-for electronic device, abs() is to calculate an absolute value because RSSU is a negative number, a is signal strength in a case in which a Bluetooth device is one meter away, and n is an environment attenuation factor.

It may be understood that, in another embodiment, the second electronic device 12 and the control center 20 may calculate the distance information by using the Bluetooth signal strength between the second electronic device and the to-be-searched-for electronic device and the second identification information of the second electronic device.

In an embodiment, the control center 20 prestores location information of the second electronic device. For example, the second electronic devices include a television, a refrigerator, and a washing machine that have fixed locations. Location coordinates of the television may be set to (0, 0). Coordinates of the refrigerator are determined based on a relative location relationship between the television and the refrigerator, and a preset coordinate location is stored in the control center.

In an embodiment, the first electronic device 11 is further configured to: when the to-be-searched-for electronic device 13 is found through scanning, determine signal strength between the first electronic device 11 and the to-be-searched-for electronic device 13, and determine, based on a first change feature that is of the signal strength and that is within a preset time period, a second change feature of the distance between the first electronic device 11 and the to-be-searched-for electronic device 13.

Specifically, the first electronic device 11 may determine, based on a change of received signal strength of interaction between the first electronic device 11 and the to-be-searched-for electronic device 13, a change of the distance between the first electronic device 11 and the to-be-searched-for electronic device 13, so that the user may determine a movement direction based on the change of the distance.

For example, when a mobile phone scans for and finds a headset, and a user holds the mobile phone and moves toward the to-be-searched-for headset, if the mobile phone moves toward and gradually approaches the headset, Bluetooth signal strength of interaction between the mobile phone and the headset becomes stronger. Based on stronger signal strength, it is determined that a distance between the mobile phone and the headset becomes smaller, and the user may determine that the user is approaching the headset. Correspondingly, based on weaker signal strength, it is determined that the distance between the mobile phone and the headset changes, it may be determined that the user is moving away from the headset.

Optionally, the first electronic device is further configured to generate prompt information based on the second change feature.

Specifically, when the distance between the first electronic device and the to-be-searched-for electronic device changes, a corresponding prompt information is generated. For example, when the first electronic device is approaching the to-be-searched-for electronic device, the first electronic device may generate voice information or text information "approaching the device", to remind a user whether a movement direction is accurate, so that the user adjusts the movement direction in time.

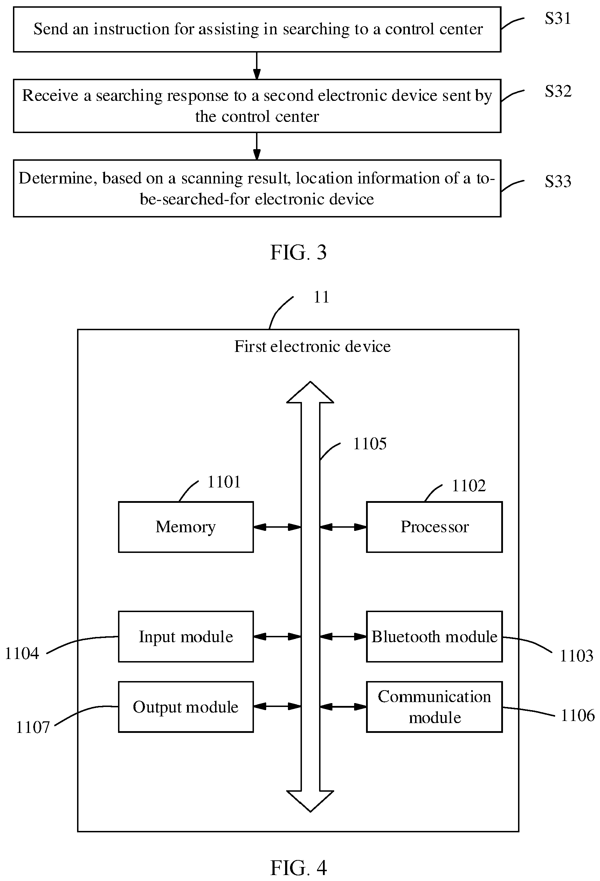

FIG. 3 is a schematic flowchart of a locating method according to an embodiment of this application. The locating method is applied to the electronic device in the foregoing embodiments.

As shown in FIG. 3, the locating method provided in this embodiment of this application specifically includes the following steps.

Step S31: Send an instruction for assisting in searching to a control center.

The instruction for assisting in searching is generated by a first electronic device, the control center generates a first instruction for searching based on the instruction for assisting in searching, and sends the first instruction for searching to at least one second electronic device, and the second electronic device scans, based on the first instruction for searching, for a to-be-searched-for electronic device to generate a scanning result, and sends the scanning result to the control center.

Step S32: Receive a searching response to the second electronic device sent by the control center.

The searching response includes a scanning result.

Step S33: Determine, based on the scanning result, location information of the to-be-searched-for electronic device.

In this way, a user sends the instruction for assisting in searching to the control center 20 by using the first electronic device 11, to enable the control center 20 to send the first instruction for searching to another electronic device, so that the to-be-searched-for electronic device 13 is searched for by using the another second electronic device 12. In addition, a location of the to-be-searched-for electronic device 13 is determined based on the scanning result, to improve a locating range and locating efficiency of an electronic device, so that the to-be-searched-for electronic device is quickly located and found.

In an embodiment, the instruction for assisting in searching includes first identification information of the to-be-searched-for electronic device and second identification information of the second electronic device.

In this way, the instruction for assisting in searching carries the first identification information and the second identification information, to enable the control center 20 to generate the first instruction for searching based on the first identification information. The control center 20 is further configured to send the first instruction for searching to the second electronic device that is corresponding to the second identification information.

In some embodiments, the method further includes:

sending a second instruction for searching to the second electronic device, to enable the second electronic device to scan, based on the second instruction for searching, for the to-be-searched-for electronic device.

In this way, when the second electronic device is within a scanning range of the first electronic device, the first electronic device 11 is further configured to: generate the second instruction for searching and send the second instruction for searching to the second electronic device 12, and the first electronic device sends the instruction for searching to the second electronic device within a predetermined area (for example, within a Bluetooth signal range of the first electronic device), to enable the second electronic device to scan and search for the to-be-searched-for electronic device. At least one second electronic device jointly scans and searches for the to-be-searched-for electronic device, to improve a scanning and searching range, so that the to-be-searched-for electronic device is quickly located and found.

In some embodiments, the method further includes:

sending a query request to the control center, to obtain the second identification information of the second electronic device or the first identification information of the to-be-searched-for electronic device; and

receiving a query response sent by the control center, where the query response includes the second identification information of the second electronic device or the first identification information of the to-be-searched-for electronic device.

In this way, a query message is sent to quickly determine to-be-searched-for information about the to-be-searched-for electronic device, so that an object is quickly located and found.

In some embodiments, the method further includes:

sending a first creating request to the control center, to enable the control center to create a family account based on the first creating request; and

sending a second creating request to the control center, to enable the control center to create a subaccount of the family account based on the second creating request, where the second creating request includes any one of the first identification information of the to-be-searched-for

electronic device, the second identification information of the second electronic device, and third information of the first electronic device.

In an embodiment, the scanning result includes the Bluetooth signal strength of the to-be-searched-for electronic device and the second identification information of the second electronic device, and step S31 specifically includes:

determining, based on the signal strength, distance information between the to-be-searched-for electronic device and the second electronic device; and determine the location information based on the second identification information and the distance information.

In some embodiments, the method further includes:

determining signal strength of the to-be-searched-for electronic device within the scanning range of the first electronic device; and
determining, based on a first change feature that is of the signal strength and that is within a preset time period, a second change feature of the distance between the first electronic device and the to-be-searched-for electronic device.

In an embodiment, the first electronic device is further configured to generate prompt information based on the second change feature.

An embodiment of this application provides a locating method, applied to a control center 20 of a locating system 100. The locating system further includes a plurality of electronic devices, and the method includes:

receiving an instruction for assisting in searching sent by a first electronic device in the plurality of electronic devices, generating a first instruction for searching based on the instruction for assisting in searching, and sending the first instruction for searching to at least one second electronic device in the plurality of electronic devices, to enable the second electronic device to perform a Bluetooth scanning operation to scan for a to-be-searched-for electronic device; and
sending a searching response to the first electronic device, where the searching response is obtained based on the Bluetooth scanning operation of the second electronic device, to enable the first electronic device to obtain, based on the searching response, location information of the to-be-searched-for electronic device.

Further, before the sending a searching response to the first electronic device, the method further includes:

receiving a scanning result sent by the second electronic device, where the scanning result is obtained by the second electronic device based on the Bluetooth scanning operation, determining the location information of the to-be-searched-for electronic device based on the scanning result, and generating the searching response based on the location information, where the searching response includes the location information; or

receiving a scanning result sent by the second electronic device, where the scanning result is obtained by the second electronic device based on the Bluetooth scanning operation, and generating the searching response based on the scanning result, where the searching response includes the scanning result.

Further, the instruction for assisting in searching includes first identification information of the to-be-searched-for electronic device, and the generating a first instruction for searching based on the instruction for assisting in searching includes:
generating the first instruction for searching based on the first identification information.

Further, the instruction for assisting in searching further includes second identification information of the second electronic device, and the method further includes:
determining the second electronic device based on the second identification information.

Further, the control center stores the first identification information of the to-be-searched-for device, and the method further includes:

receiving a query request sent by the first electronic device; and
generating a query response based on the received query request, and sending the query response to the first electronic device, where the query response includes the first identification information of the to-be-searched-for electronic device.

Further, the family account includes a plurality of subaccounts, each subaccount includes at least one electronic device, and the instruction for assisting in searching further includes a family account and a subaccount.

Further, the scanning result includes Bluetooth signal strength between the to-be-searched-for electronic device and the second electronic device and the second identification information of the second electronic device, and the method further includes:

determining, based on the Bluetooth signal strength, distance information between the to-be-searched-for electronic device and the second electronic device; and
determining the location information based on the second identification information and the distance information.

An embodiment of this application further provides a locating method, applied to an electronic device in a locating system, and the method includes:

receiving a first instruction for searching, where the first instruction for searching instructs the electronic device to search for a to-be-searched-for electronic device;

performing a Bluetooth scanning operation based on the first instruction for searching to scan for the to-be-searched-for electronic device; and

returning a searching response to the first instruction for searching based on a scanning result of the Bluetooth scanning operation.

Further, the locating system further includes a control center, and the first instruction for searching is received from the control center; or the locating system further includes another electronic device, and the first instruction for searching is received from the another electronic device.

Further, the searching response includes the scanning result and the method further includes: determining, based on the scanning result, location information of the to-be-searched-for electronic device.

Further, the scanning result includes the Bluetooth signal strength between the to-be-searched-for electronic device and the second electronic device and second identification information of the second electronic device, and the method further includes:

determining, based on the Bluetooth signal strength, distance information between the to-be-searched-for electronic device and the second electronic device; and

determining the location information based on the second identification information and the distance information.

FIG. 4 is a schematic diagram of a structure of a first electronic device 11 according to an embodiment of the present invention. As shown in FIG. 4, the first electronic device 11 may include a memory 1101, a processor 1102, a Bluetooth module 1103, an input module 1104, a bus 1105, and a communication module 1106. The memory 1101, the Bluetooth module 1103, the communication module 1106, and the input module 1104 are connected to the processor 1102 through the bus 1105.

The memory 1101 may be configured to store a software program and a module. The processor 1102 runs the software program and the module that are stored in the memory 1101, to execute various function applications and data processing of the first electronic device. The memory 1101 may mainly include a program storage area and a data storage area. The program storage area may store an operating system, an application required by at least one function (like a sound playing function and an image playing function), and the like. The data storage area may store data (such as audio data or a phone book) created based on use of the first electronic device, and the like. In addition, the memory 1101 may include a high-speed random access memory, and may further include a non-volatile memory like at least one magnetic disk storage device, a flash memory, or another volatile solid-state storage device.

The processor 1102 may be a central processing unit (Central Processing Unit, CPU), a general-purpose processor, a coprocessor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor 1102 may alternatively be a combination implementing a computing function, for example, a combination of one or more microprocessors, or a combination of a DSP and a microprocessor. The processor 1102 is configured to perform the steps performed by the first electronic device in FIG. 1, FIG. 2, and FIG. 3. For example, the processor 1102 may be configured to: detect that the first electronic device is configured to generate an instruction for assisting in searching, and determine, based on a searching result, location information of a to-be-searched-for electronic device.

The input module 1104 is configured to receive an input indication of a user, and the indication may be a voice indication or a text indication. The input module 1104 may be a voice recognition module, and is configured to convert the voice indication of the user into text information. The input module 1104 may alternatively be a touchscreen or a keyboard.

The Bluetooth module 1103 is configured to implement the steps that are performed by the first electronic device and that are related to a Bluetooth function in the foregoing embodiments. For example, the Bluetooth module 1103 may be configured to: enable Bluetooth, and broadcast a query data packet to a Bluetooth device within an effective range; receive a query response data packet returned by the Bluetooth device within the effective range; determine, based on information in the query response data packet, a to-be-paired Bluetooth device from the Bluetooth device within the effective range; and send a pairing request to the to-be-paired Bluetooth device. The Bluetooth module 1103 may alternatively be configured to: enable Bluetooth, and enter a visible state; receive a query data packet broadcast by a Bluetooth device within an effective range, and return a query response data packet to the Bluetooth device within the effective range; and receive a pairing request sent by the Bluetooth device within the effective range, and confirm pairing.

It may be understood that, in this embodiment, the first electronic device 11 further includes an output module 1107, and the output module 1107 is connected to the processor 1102 through the bus 1105. The output module 1107 is configured to implement the steps that are performed by the first electronic device and that are related to an output function in the foregoing embodiments. For example, the output module 1107 may be a voice module, for example, a speaker, and is configured to play "prompt information". Certainly, the output module 1107 may alternatively be a display module, for example, a display screen, and is configured to display "prompt information".

The communication module 1106 is configured to establish a communication connection to a control center 20.

In an embodiment, a structure of a second electronic device 12 may be the same as the structure of the first electronic device 11 in the foregoing embodiments, and details are not described herein again.

In an embodiment, a structure of a third electronic device may be the same as the structure of the first electronic device 11 in the foregoing embodiments, and details are not described herein again.

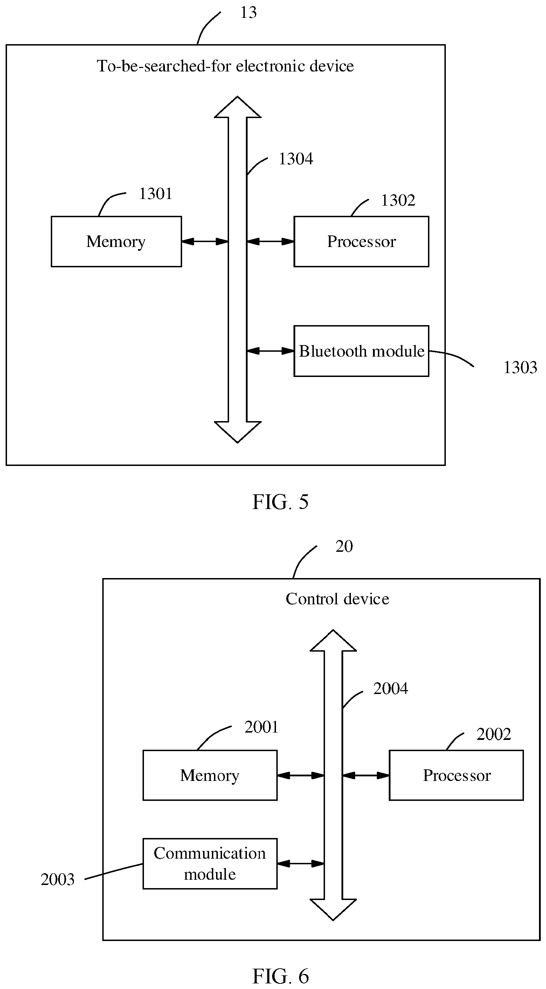

FIG. 5 is a schematic diagram of a structure of a to-be-searched-for electronic device according to an embodiment of the present invention. As shown in FIG. 5, the to-be-searched-for electronic device 13 may include a memory 1301, a processor 1302, a Bluetooth module 1303, and a bus 1304. The memory 1301 and the Bluetooth module 1303 are connected to the processor 1302 through the bus 1304.

The memory 1301 may be configured to store a software program and a module. The processor 1302 and the Bluetooth module 1303 run the software program and the module that are stored in the memory 1301, so that the to-be-searched-for electronic device performs the steps of the to-be-searched-for electronic device in the foregoing embodiments. The memory 1301 may mainly include a program storage area and a data storage area. The program storage area may store an operating system, an application required by at least one function (like a sound playing function and an image playing function), and the like. The data storage area may store data (such as audio data or a phone book) created based on use of the to-be-searched-for electronic device, and the like. In addition, the memory 1301 may include a high-speed random access memory, and may further include a non-volatile memory like at least one magnetic disk storage device, a flash memory, or another volatile solid-state storage device.

The processor 1302 may be a central processing unit (Central Processing Unit, CPU), a general-purpose processor, a coprocessor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor 1302 may alternatively be a combination implementing a computing function, for example, a combination of one or more microprocessors, or a combination of a DSP and a microprocessor. The processor 1302 is configured for the steps performed by the to-be-searched-for electronic device in the foregoing embodiments. For example, the processor 1302 may be configured to enable or disable a Bluetooth function.

The Bluetooth module 1303 is configured to implement the steps that are performed by the to-be-searched-for electronic device and that are related to a Bluetooth protocol in the foregoing embodiments. For example, the Bluetooth module 1303 may be configured to: enable Bluetooth, and enter a visible state; receive a query data packet broadcast by a Bluetooth device within an effective range, and return a query response data packet to the Bluetooth device within the effective range; and receive a pairing request sent by the Bluetooth device within the effective range, and confirm pairing. The Bluetooth module 1303 may alternatively be configured to: enable Bluetooth, and broadcast a query data packet to a Bluetooth device within an effective range; receive a query response data packet returned by the Bluetooth devices within the effective range; determine, based on information in the query response data packet, a to-be-paired Bluetooth device from the Bluetooth device within the effective range; and send a pairing request to the to-be-paired Bluetooth device.

FIG. 6 is a schematic diagram of a structure of a control center according to an embodiment of the present invention. As shown in FIG. 6, the control center 20 may include a memory 2001, a processor 2002, a communication module 2003, and a bus 2004. The memory 2001 and the communication module 2003 are connected to the processor 2002 through the bus 2004.

The memory 2001 may be configured to store a software program and a module. The processor 2002 and the communication module 2003 run the software program and the module that are stored in the memory 2001, so that the control center 20 performs steps of the control center 20 in the foregoing embodiments. The memory 2001 may mainly include a program storage area and a data storage area. The program storage area may store an operating system, an application required by at least one function (like a sound playing function and an image playing function), and the like. The data storage area may store data (such as audio data or a phone book) created based on use of the to-be-searched-for electronic device, and the like. In addition, the memory 2001 may include a high-speed random access memory, and may further include a non-volatile memory like at least one magnetic disk storage device, a flash memory, or another volatile solid-state storage device.

The processor 2002 may be a central processing unit (Central Processing Unit, CPU), a general-purpose processor, a coprocessor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor 2002 may alternatively be a combination implementing a computing function, for example, a combination of one or more microprocessors, or a combination of a DSP and a microprocessor. The processor 2002 is configured for the steps performed by the control center 20 in the foregoing embodiments.

The communication module 2003 is configured to implement establishment of a communication connection by the electronic device 10.

This embodiment further provides a computer storage medium. The computer storage medium stores computer instructions. When the computer instructions are run on an electronic device, the electronic device is enabled to perform the foregoing related method steps, to implement the blockchain signature verification method in the foregoing embodiments.

This embodiment further provides a computer program product. When the computer program product is run on an electronic device, the electronic device is enabled to perform the foregoing related steps, to implement the blockchain signature verification method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus is run, the processor may execute the computer-executable instructions stored in the memory, to enable the chip to perform the blockchain signature verification method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may be one or more physical units, may be placed in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in a form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A locating system (100), comprising a control center (20) and a plurality of electronic devices (10-13), wherein all the plurality of electronic devices (10-13) may communicate with the control center (20);

    a first electronic device (11) in the plurality of electronic devices (10-13) is configured to: generate an instruction for assisting in searching and send the instruction for assisting in searching to the control center (20);

the control center (20) is configured to: receive the instruction for assisting in searching sent by the first electronic device (11), generate a first instruction for searching based on the instruction for assisting in searching, and send the first instruction for searching to at least one second electronic device (12) in the plurality of electronic devices (10-13);

the second electronic device (12) is configured to: receive the first instruction for searching, and perform a Bluetooth scanning operation based on the first instruction for searching to scan for a to-be-searched-for electronic device (13), wherein both the second electronic device (12) and the to-be-searched-for electronic device (13) have a Bluetooth function;

the control center (20) is further configured to send a searching response to the first electronic device (11), wherein the searching response is obtained based on the Bluetooth scanning operation of the second electronic device (12); and

the first electronic device (11) is further configured to: receive the searching response, and obtain, based on the searching response, location information of the to-be-searched-for electronic device (13),

wherein the instruction for assisting in searching comprises first identification information of the to-be-searched-for electronic device (13), and the control center (20) is further configured to: generate the first instruction for searching based on the first identification information, and send the first instruction for searching to the second electronic device (12)

**characterized in that**

the control center (20) stores a family account, the family account comprises a plurality of subaccounts, each subaccount is associated with at least one electronic device (10-13), and the instruction for assisting in searching further comprises a family account and a subaccount.

2. The locating system (100) according to claim 1, wherein

the second electronic device (12) is further configured to: obtain a scanning result based on the Bluetooth scanning operation, determine, based on the scanning result, the location information of the to-be-searched-for electronic device (13), generate the searching response based on the location information, and send the searching response to the control center (20), wherein the searching response comprises the location information;

the second electronic device (12) is further configured to: obtain a scanning result based on the Bluetooth scanning operation, and send the scanning result to the control center (20); and the control center (20) is further configured to: determine, based on the scanning result, the location information of the to-be-searched-for electronic device (13), and generate the searching response based on the location information, wherein the searching response comprises the location information; or

the second electronic device (12) is further configured to: obtain a scanning result based on the Bluetooth scanning operation, and send the scanning result to the control center (20); the control center (20) is further configured to generate the searching response based on the scanning result, wherein the searching response comprises the scanning result; and the first electronic device (11) is specifically configured to determine, based on the scanning result, the location information of the to-be-searched-for electronic device (13).

3. The locating system (100) according to claims 1 or 2, wherein the instruction for assisting in searching further comprises second identification information of the second electronic device (12), and the control center (20) is configured to: determine the second electronic device (12) based on the second identification information and send the first instruction for searching to the second electronic device (12).

4. The locating system (100) according to any of claims 1 to 3, wherein the control center (20) stores the first identification information of the to-be-searched-for device;

the first electronic device (11) is further configured to send a query request to the control center (20), to query the first identification information of the to-be-searched-for electronic device (13);

the control center (20) is further configured to: generate a query response based on the received query request, and send the query response to the first electronic device (10), wherein the query response comprises the first identification information of the to-be-searched-for electronic device (13); and

the first electronic device (11) is further configured to receive the query response sent by the control center (20).

5. The locating system (100) according to claim 2, wherein the scanning result comprises Bluetooth signal strength between the to-be-searched-for electronic device (13) and the second electronic device (12) and second identification information of the second electronic device (12), and the determining, based on the scanning result, the location information of the to-be-searched-for electronic device (13) comprises:

> determining, based on the Bluetooth signal strength, distance information between the to-be-searched-for electronic device (13) and the second electronic device (12); and
> determining the location information based on the second identification information and the distance information.

6. The locating system (100) according to any one of claims 1 to 5, wherein the location information comprises a distance between the second electronic device (12) and the to-be-searched-for electronic device (13).

7. The locating system (100) according to any one of claims 1 to 6,
the first electronic device (11) is further configured to: when the to-be-searched-for electronic device (13) is found through scanning, determine Bluetooth signal strength between the to-be-searched-for electronic device (13) and the first electronic device (11), and determine a second change feature of a distance between the first electronic device (11) and the to-be-searched-for electronic device (13) based on a first change feature that is of the Bluetooth signal strength and that is within a preset time period

8. The locating system (100) according to claim 7, wherein
the first electronic device (11) is further configured to generate prompt information based on the second change feature.

9. The locating system (100) according to any one of claims 1 to 8, wherein the electronic devices (10-13) further include a third electronic device and the first electronic device (11) is further configured to send the instruction for assisting in searching to the third electronic device, and the third electronic device is further configured to: receive the instruction for assisting in searching, and send the instruction for assisting in searching to the control center (20).

10. A locating method, applied to a first electronic device (11) in a locating system (100), wherein the locating system (100) further comprises a control center (20), and the method comprises:

> sending (S31) an instruction for assisting in searching to the control center (20), to enable the control center (20) to control, based on the instruction for assisting in searching, a second electronic device (23) in the locating system (100) to perform a Bluetooth scanning operation to scan for a to-be-searched-for electronic device (13);
receiving (S32) a searching response sent by the control center (20), and obtaining, based on the searching response, location information of the to-be-searched-for electronic device (13), wherein the searching response is obtained based on the Bluetooth scanning operation of the second electronic device (12);
and **characterized in that** the instruction for assisting in searching comprises first identification information of the to-be-searched-for electronic device (13); and
the control center (20) stores a family account, the family account comprises a plurality of subaccounts, each subaccount is associated with at least one electronic device (10-13), and the instruction for assisting in searching further comprises a family account and a subaccount.

11. The locating method according to claim 10, wherein the searching response comprises a scanning result obtained by the second electronic device (12) by performing the Bluetooth scanning operation, and the obtaining, based on the searching response, location information of the to-be-searched-for electronic device (13) comprises:
Determining (S33), based on the scanning result, the location information of the to-be-searched-for electronic device (13).

12. The locating method according to any of claims 10 to 11, wherein the control center (20) stores the first identification information of the to-be-searched-for device (13), and the method further comprises:

> sending a query request to the control center (20), to query the first identification information of the to-be-searched-for electronic device (13); and
> receiving a query response sent by the control center (20), wherein the query response comprises the first identification information of the to-be-searched-for electronic device (13).

13. The locating method according to any of claims 10 to 12 comprising:

> determining signal strength of the to-be-searched-for electronic device (13) within the scanning range of the first electronic device (11); and
> determining, based on a first change feature that is of the signal strength and that is within a preset time period, a second change feature of the distance between the first electronic device (11) and the to-be-searched-for electronic device (13).

**14.** An electronic device (11), including a processor (1102) and a memory (1101), wherein the memory (1101) is configured to store instructions, and the processor (1102) is configured to invoke the instructions in the memory (1101), to enable the first electronic device (11) to perform the locating method according to any of claims 10- to 13.

**15.** A computer-readable storage medium, comprising computer instructions, wherein when the computer instructions are run on an electronic device (11), the electronic device (11) is enabled to perform the locating method according to any one of claims 10 to 13.

**Patentansprüche**

**1.** Lokalisierungssystem (100), das eine Steuerzentrale (20) und eine Vielzahl elektronischer Vorrichtungen (10-13) umfasst, wobei alle der Vielzahl elektronischer Vorrichtungen (10-13) mit der Steuerzentrale (20) kommunizieren können;

eine erste elektronische Vorrichtung (11) in der Vielzahl elektronischer Vorrichtungen (10-13) konfiguriert ist zum: Erzeugen einer Suchunterstützungsanweisung und Senden der Suchunterstützungsanweisung an die Steuerzentrale (20);
die Steuerzentrale (20) konfiguriert ist zum: Empfangen der von der ersten elektronischen Vorrichtung (11) gesendeten Suchunterstützungsanweisung, Erzeugen einer ersten Suchanweisung basierend auf der Suchunterstützungsanweisung und Senden der ersten Suchanweisung an mindestens eine zweite elektronische Vorrichtung (12) in der Vielzahl elektronischer Vorrichtungen (10-13);
die zweite elektronische Vorrichtung (12) konfiguriert ist zum: Empfangen der ersten Suchanweisung und Durchführen eines Bluetooth-Scanvorgangs basierend auf der ersten Suchanweisung, um nach einer zu suchenden elektronischen Vorrichtung (13) systematisch zu scannen, wobei sowohl die zweite elektronische Vorrichtung (12) als auch die zu suchende elektronische Vorrichtung (13) eine Bluetooth-Funktion aufweisen;
die Steuerzentrale (20) ferner konfiguriert ist zum: Senden einer Suchantwort an die erste elektronische Vorrichtung (11), wobei die Suchantwort basierend auf dem Bluetooth-Scanvorgang der zweiten elektronischen Vorrichtung (12) erhalten wird; und die erste elektronische Vorrichtung (11) ferner konfiguriert ist zum: Empfangen der Suchantwort und Erhalten, basierend auf der Suchantwort, von Lokalisierungsinformationen der zu suchenden elektronischen Vorrichtung (13),
wobei die Suchunterstützungsanweisung erste Identifikationsinformationen der zu suchenden elektronischen Vorrichtung (13) umfasst und die Steuerzentrale (20) ferner konfiguriert ist zum: Erzeugen der ersten Suchanweisung basierend auf den ersten Identifikationsinformationen und Senden der ersten Suchanweisung an die zweite elektronische Vorrichtung (12), **dadurch gekennzeichnet, dass**
die Steuerzentrale (20) ein Familienkonto speichert, das Familienkonto eine Vielzahl von Unterkonten umfasst, jedes Unterkonto mit mindestens einer elektronischen Vorrichtung (10-13) verknüpft ist und die Suchunterstützungsanweisung ferner ein Familienkonto und ein Unterkonto umfasst.

**2.** Lokalisierungssystem (100) nach Anspruch 1, wobei

die zweite elektronische Vorrichtung (12) ferner konfiguriert ist zum: Erhalten eines Scanergebnisses basierend auf dem Bluetooth-Scanvorgang, Bestimmen, basierend auf dem Scanergebnis, der Lokalisierungsinformationen der zu suchenden elektronischen Vorrichtung (13), Erzeugen der Suchantwort basierend auf den Lokalisierungsinformationen, und Senden der Suchantwort an die Steuerzentrale (20), wobei die Suchantwort die Lokalisierungsinformationen umfasst;
die zweite elektronische Vorrichtung (12) ferner konfiguriert ist zum: Erhalten eines Scanergebnisses basierend auf dem Bluetooth-Scanvorgang und Senden des Scanergebnisses an die Steuerzentrale (20); und die Steuerzentrale (20) ferner konfiguriert ist zum: Bestimmen, basierend auf dem Scanergebnis, der Lokalisierungsinformationen der zu suchenden elektronischen Vorrichtung (13) und Erzeugen der Suchantwort basierend auf den Lokalisierungsinformationen, wobei die Suchantwort die Lokalisierungsinformationen umfasst; oder
die zweite elektronische Vorrichtung (12) ferner konfiguriert ist zum: Erhalten eines Scanergebnisses basierend auf dem Bluetooth-Scanvorgang und Senden des Scanergebnisses an die Steuerzentrale (20); die Steuerzentrale (20) ferner konfiguriert ist, um die Suchantwort basierend auf dem Scanergebnis zu erzeugen, wobei die Suchantwort das Scanergebnis umfasst; und die erste elektronische Vorrichtung (11) spezifisch konfiguriert ist, um basierend auf dem Scanergebnis die Lokalisierungsinformationen der zu suchenden elektronischen Vorrichtung (13) zu bestimmen.

3. Lokalisierungssystem (100) nach Anspruch 1 oder 2, wobei die Suchunterstützungsanweisung ferner zweite Identifikationsinformationen der zweiten elektronischen Vorrichtung (12) umfasst und die Steuerzentrale (20) konfiguriert ist zum: Bestimmen der zweiten elektronischen Vorrichtung (12) basierend auf den zweiten Identifikationsinformationen und Senden der ersten Suchanweisung an die zweite elektronische Vorrichtung (12).

4. Lokalisierungssystem (100) nach einem der Ansprüche 1 bis 3, wobei die Steuerzentrale (20) die ersten Identifikationsinformationen der zu suchenden Vorrichtung speichert;

   die erste elektronische Vorrichtung (11) ferner konfiguriert ist, um eine Abfrageanforderung an die Steuerzentrale (20) zu senden, um die ersten Identifikationsinformationen der zu suchenden elektronischen Vorrichtung (13) abzufragen;
   die Steuerzentrale (20) ferner konfiguriert ist zum: Erzeugen einer Abfrageantwort basierend auf der empfangenen Abfrageanforderung und Senden der Abfrageantwort an die erste elektronische Vorrichtung (10), wobei die Abfrageantwort die ersten Identifikationsinformationen der zu suchenden elektronischen Vorrichtung (13) umfasst; und
   die erste elektronische Vorrichtung (11) ferner konfiguriert ist, um die von der Steuerzentrale (20) gesendete Abfrageantwort zu empfangen.

5. Lokalisierungssystem (100) nach Anspruch 2, wobei das Scanergebnis eine Bluetooth-Signalstärke zwischen der zu suchenden elektronischen Vorrichtung (13) und der zweiten elektronischen Vorrichtung (12) und zweite Identifikationsinformationen der zweiten elektronischen Vorrichtung (12) umfasst und das Bestimmen, basierend auf dem Scanergebnis, der Lokalisierungsinformationen der zu suchenden elektronischen Vorrichtung (13) umfasst:

   Bestimmen, basierend auf der Bluetooth-Signalstärke, von Entfernungsinformationen zwischen der zu suchenden elektronischen Vorrichtung (13) und der zweiten elektronischen Vorrichtung (12); und
   Bestimmen der Lokalisierungsinformationen basierend auf den zweiten Identifikationsinformationen und den Entfernungsinformationen.

6. Lokalisierungssystem (100) nach einem der Ansprüche 1 bis 5, wobei die Lokalisierungsinformationen eine Entfernung zwischen der zweiten elektronischen Vorrichtung (12) und der zu suchenden elektronischen Vorrichtung (13) umfassen.

7. Lokalisierungssystem (100) nach einem der Ansprüche 1 bis 6, die erste elektronische Vorrichtung (11) ferner konfiguriert ist zum: Bestimmen der Bluetooth-Signalstärke zwischen der zu suchenden elektronischen Vorrichtung (13) und der ersten elektronischen Vorrichtung (11), wenn die zu suchende elektronische Vorrichtung (13) durch Scannen gefunden wird, und Bestimmen eines zweiten Änderungsmerkmals einer Entfernung zwischen der ersten elektronischen Vorrichtung (11) und der zu suchenden elektronischen Vorrichtung (13) basierend auf einem ersten Änderungsmerkmal, das sich auf die Bluetooth-Signalstärke bezieht und das innerhalb einer voreingestellten Zeitspanne auftritt.

8. Lokalisierungssystem (100) nach Anspruch 7, wobei die erste elektronische Vorrichtung (11) ferner konfiguriert ist, um Eingabeaufforderungsinformationen basierend auf dem zweiten Änderungsmerkmal zu erzeugen.

9. Lokalisierungssystem (100) nach einem der Ansprüche 1 bis 8, wobei die elektronischen Vorrichtungen (10-13) ferner eine dritte elektronische Vorrichtung einschließen und die erste elektronische Vorrichtung (11) ferner konfiguriert ist, um die Suchunterstützungsanweisung an die dritte elektronische Vorrichtung zu senden, und die dritte elektronische Vorrichtung ferner konfiguriert ist zum: Empfangen der Suchunterstützungsanweisung und Senden der Suchunterstützungsanweisung an die Steuerzentrale (20).

10. Lokalisierungsverfahren, das auf eine erste elektronische Vorrichtung (11) in einem Lokalisierungssystem (100) angewendet wird, wobei das Lokalisierungssystem (100) ferner eine Steuerzentrale (20) umfasst und das Verfahren umfasst:

    Senden (S31) einer Suchunterstützungsanweisung an die Steuerzentrale (20), um die Steuerzentrale (20) zu befähigen, basierend auf der Suchunterstützungsanweisung eine zweite elektronische Vorrichtung (23) in dem Lokalisierungssystem (100) zu steuern, um einen Bluetooth-Scanvorgang durchzuführen, um nach einer zu suchenden elektronischen Vorrichtung (13) zu scannen;
    Empfangen (S32) einer Suchantwort, die von der Steuerzentrale (20) gesendet wird, und Erhalten, basierend auf der Suchantwort, von Lokalisierungsinformationen der zu suchenden elektronischen Vorrichtung (13), wobei die Suchantwort basierend auf dem Bluetooth-Scanvorgang der zweiten elektronischen Vorrichtung (12) erhalten wird; und
    **dadurch gekennzeichnet, dass** die Suchunterstützungsanweisung erste Identifikationsinformationen der zu suchenden elektronischen Vorrichtung (13) umfassen; und

die Steuerzentrale (20) ein Familienkonto speichert, das Familienkonto eine Vielzahl von Unterkonten umfasst, jedes Unterkonto mit mindestens einer elektronischen Vorrichtung (10-13) verknüpft ist und die Suchunterstützungsanweisung ferner ein Familienkonto und ein Unterkonto umfasst.

11. Lokalisierungsverfahren nach Anspruch 10, wobei die Suchantwort ein Scanergebnis umfasst, das von der zweiten elektronischen Vorrichtung (12) durch Durchführen des Bluetooth-Scanvorgangs erhalten wird, und das Erhalten, basierend auf der Suchantwort, von Lokalisierungsinformationen der zu suchenden elektronischen Vorrichtung (13) umfasst: Bestimmen (S33), basierend auf dem Scanergebnis, der Lokalisierungsinformationen der zu suchenden elektronischen Vorrichtung (13).

12. Lokalisierungsverfahren nach einem der Ansprüche 10 bis 11, wobei die Steuerzentrale (20) die ersten Identifikationsinformationen der zu suchenden Vorrichtung (13) speichert und das Verfahren ferner umfasst:

Senden einer Abfrageanforderung an die Steuerzentrale (20), um die ersten Identifikationsinformationen der zu suchenden elektronischen Vorrichtung (13) abzufragen; und Empfangen einer Abfrageantwort, die von der Steuerzentrale (20) gesendet wird, wobei die Abfrageantwort die ersten Identifikationsinformationen der zu suchenden elektronischen Vorrichtung (13) umfasst.

13. Lokalisierungsverfahren nach einem der Ansprüche 10 bis 12, das umfasst: Bestimmen der Signalstärke der zu suchenden elektronischen Vorrichtung (13) innerhalb des Scanbereiches der ersten elektronischen Vorrichtung (11) und Bestimmen, basierend auf einem ersten Änderungsmerkmal, das sich auf die Signalstärke bezieht und das innerhalb einer voreingestellten Zeitspanne auftritt, eines zweiten Änderungsmerkmals der Entfernung zwischen der ersten elektronischen Vorrichtung (11) und der zu suchenden elektronischen Vorrichtung (13).

14. Elektronische Vorrichtung (11), die einen Prozessor (1102) und einen Speicher (1101) einschließt, wobei der Speicher (1101) konfiguriert ist, um Anweisungen zu speichern, und der Prozessor (1102) konfiguriert ist, um die Anweisungen in dem Speicher (1101) aufzurufen, um die erste elektronische Vorrichtung (11) zu befähigen, das Lokalisierungsverfahren nach einem der Ansprüche 10 bis 13 durchzuführen.

15. Computerlesbares Speicherungsmedium, das Computeranweisungen umfasst, wobei, wenn die Computeranweisungen auf einer elektronischen Vorrichtung (11) ausgeführt werden, die elektronische Vorrichtung (11) befähigt wird, das Lokalisierungsverfahren nach einem der Ansprüche 10 bis 13 durchzuführen.

**Revendications**

1. Système de localisation (100), comprenant un centre de commande (20) et une pluralité de dispositifs électroniques (10-13), dans lequel toute la pluralité de dispositifs électroniques (10-13) peut communiquer avec le centre de commande (20) ;

un premier dispositif électronique (11) dans la pluralité de dispositifs électroniques (10-13) est configuré pour : générer une instruction d'aide à la recherche et envoyer l'instruction d'aide à la recherche au centre de commande (20) ; le centre de commande (20) est configuré pour : recevoir l'instruction d'aide à la recherche envoyée par le premier dispositif électronique (11), générer une première instruction de recherche sur la base de l'instruction d'aide à la recherche, et envoyer la première instruction de recherche à au moins un deuxième dispositif électronique (12) dans la pluralité de dispositifs électroniques (10-13) ; le deuxième dispositif électronique (12) est configuré pour : recevoir la première instruction de recherche, et effectuer une opération de balayage Bluetooth sur la base de la première instruction de recherche pour rechercher par balayage un dispositif électronique à rechercher (13), dans lequel à la fois le deuxième dispositif électronique (12) et le dispositif électronique à rechercher (13) ont une fonction Bluetooth ; le centre de commande (20) est en outre configuré pour envoyer une réponse de recherche au premier dispositif électronique (11), dans lequel la réponse de recherche est obtenue sur la base de l'opération de balayage Bluetooth du deuxième dispositif électronique (12) ; et le premier dispositif électronique (11) est en outre configuré pour : recevoir la réponse de recherche, et obtenir, sur la base de la réponse de recherche, des informations d'emplacement du dispositif électronique à rechercher (13), dans lequel l'instruction d'aide à la recherche comprend des premières informations d'identification du dispositif électronique à rechercher (13), et le centre de commande (20) est en outre configuré pour : générer la première instruction de recherche sur la base des premières informations d'identification, et envoyer la première instruction de recherche au deuxième dispositif électronique (12), **caractérisé en ce que**
le centre de commande (20) stocke un compte familial, le compte familial comprend une pluralité de sous-comptes, chaque sous-compte est associé à au moins un dispositif électronique (10-13), et l'instruction d'aide à la recherche comprend en outre un compte familial et un sous-compte.

2. Système de localisation (100) selon la revendication 1, dans lequel le deuxième dispositif électronique (12) est en outre configuré pour : obtenir un résultat de balayage sur la base de l'opération de balayage Bluetooth, déterminer, sur la base du résultat de balayage, les informations d'emplacement du dispositif électronique à rechercher (13), générer la réponse de recherche sur la base des informations d'emplacement, et envoyer la réponse de recherche au centre de commande (20), dans lequel la réponse de recherche comprend les informations d'emplacement ;

le deuxième dispositif électronique (12) est en outre configuré pour : obtenir un résultat de balayage sur la base de l'opération de balayage Bluetooth, et envoyer le résultat de balayage au centre de commande (20) ; et le centre de commande (20) est en outre configuré pour : déterminer, sur la base du résultat de balayage, les informations d'emplacement du dispositif électronique à rechercher (13), et générer la réponse de recherche sur la base des informations d'emplacement, dans lequel la réponse de recherche comprend les informations d'emplacement ; ou le deuxième dispositif électronique (12) est en outre configuré pour : obtenir un résultat de balayage sur la base de l'opération de balayage Bluetooth, et envoyer le résultat de balayage au centre de commande (20) ; le centre de commande (20) est en outre configuré pour générer la réponse de recherche sur la base du résultat de balayage, dans lequel la réponse de recherche comprend le résultat de balayage ; et le premier dispositif électronique (11) est spécifiquement configuré pour déterminer, sur la base du résultat de balayage, les informations d'emplacement du dispositif électronique à rechercher (13).

3. Système de localisation (100) selon les revendications 1 ou 2, dans lequel l'instruction d'aide à la recherche comprend en outre des secondes informations d'identification du deuxième dispositif électronique (12), et le centre de commande (20) est configuré pour : déterminer le deuxième dispositif électronique (12) sur la base des secondes informations d'identification et envoyer la première instruction de recherche au deuxième dispositif électronique (12).

4. Système de localisation (100) selon l'une quelconque des revendications 1 à 3, dans lequel le centre de commande (20) stocke les premières informations d'identification du dispositif à rechercher ;

le premier dispositif électronique (11) est en outre configuré pour envoyer une demande d'interrogation au centre de commande (20), pour interroger les premières informations d'identification du dispositif électronique à rechercher (13) ;
le centre de commande (20) est en outre configuré pour : générer une réponse à l'interrogation sur la base de la demande d'interrogation reçue, et envoyer la réponse à l'interrogation au premier dispositif électronique (10), dans lequel la réponse à l'interrogation comprend les premières informations d'identification du dispositif électronique à rechercher (13) ; et
le premier dispositif électronique (11) est en outre configuré pour recevoir la réponse à l'interrogation envoyée par le centre de commande (20).

5. Système de localisation (100) selon la revendication 2, dans lequel
le résultat de balayage comprend une intensité de signal Bluetooth entre le dispositif électronique à rechercher (13) et le deuxième dispositif électronique (12) et des secondes informations d'identification du deuxième dispositif électronique (12), et la détermination, sur la base du résultat de balayage, des informations d'emplacement du dispositif électronique à rechercher (13) comprend :

la détermination, sur la base de l'intensité de signal Bluetooth, d'informations de distance entre le dispositif électronique à rechercher (13) et le deuxième dispositif électronique (12) ; et
la détermination des informations d'emplacement sur la base des secondes informations d'identification et des informations de distance.

6. Système de localisation (100) selon l'une quelconque des revendications 1 à 5, dans lequel les informations d'emplacement comprennent une distance entre le deuxième dispositif électronique (12) et le dispositif électronique à rechercher (13).

7. Système de localisation (100) selon l'une quelconque des revendications 1 à 6,
le premier dispositif électronique (11) est en outre configuré pour : lorsque le dispositif électronique à rechercher (13) est trouvé par balayage, déterminer une intensité de signal Bluetooth entre le dispositif électronique à rechercher (13) et le premier dispositif électronique (11), et déterminer une seconde caractéristique de changement d'une distance entre le premier dispositif électronique (11) et le dispositif électronique à rechercher (13) sur la base d'une première caractéristique de changement qui appartient à l'intensité de signal Bluetooth et qui se situe dans une période de temps prédéfinie

8. Système de localisation (100) selon la revendication 7, dans lequel
le premier dispositif électronique (11) est en outre configuré pour générer des informations d'invite sur la base de la seconde caractéristique de changement.

9. Système de localisation (100) selon l'une quelconque des revendications 1 à 8, dans lequel les dispositifs électroniques (10-13) comportent en outre un troisième dispositif électronique et le premier dispositif électronique (11) est en outre configuré pour envoyer l'instruction d'aide à la recherche au troisième dispositif électronique, et le troisième dispositif électronique est en outre configuré pour : recevoir l'instruction d'aide à la recherche, et envoyer l'instruction d'aide à la recherche au centre de commande (20).

10. Procédé de localisation, appliqué à un premier dispositif électronique (11) dans un système de localisation (100), dans lequel le système de localisation (100) comprend en outre un centre de commande (20), et le procédé comprend :

l'envoi (S31) d'une instruction d'aide à la recherche au centre de commande (20), pour permettre au centre de commande (20) de commander, sur la base de l'instruction d'aide à la recherche, un deuxième dispositif électronique (23) dans le système de localisation (100) pour effectuer une opération de balayage Bluetooth pour rechercher par balayage un dispositif électronique à rechercher (13) ;
la réception (S32) d'une réponse de recherche envoyée par le centre de commande (20), et l'obtention, sur la base de la réponse de recherche, d'informations d'emplacement du dispositif électronique à rechercher (13), dans lequel la réponse de recherche est obtenue sur la base de l'opération de balayage Bluetooth du deuxième dispositif électronique (12) ; et **caractérisé en ce que** l'instruction d'aide à la recherche comprend des premières informations d'identification du dispositif électronique à rechercher (13) ; et

le centre de commande (20) stocke un compte familial, le compte familial comprend une pluralité de sous-comptes, chaque sous-compte est associé à au moins un dispositif électronique (10-13), et l'instruction d'aide à la recherche comprend en outre un compte familial et un sous-compte.

11. Procédé de localisation selon la revendication 10, dans lequel la réponse de recherche comprend un résultat de balayage obtenu par le deuxième dispositif électronique (12) en effectuant l'opération de balayage Bluetooth, et l'obtention, sur la base de la réponse de recherche, d'informations d'emplacement du dispositif électronique à rechercher (13) comprend :
la détermination (S33), sur la base du résultat de balayage, des informations d'emplacement du dispositif électronique à rechercher (13).

12. Procédé de localisation selon l'une quelconque des revendications 10 à 11, dans lequel le centre de commande (20) stocke les premières informations d'identification du dispositif à rechercher (13), et le procédé comprend en outre :

l'envoi d'une demande d'interrogation au centre de commande (20), pour interroger les premières informations d'identification du dispositif électronique à rechercher (13) ; et
la réception d'une réponse à l'interrogation envoyée par le centre de commande (20), dans lequel la réponse à l'interrogation comprend les premières informations d'identification du dispositif électronique à rechercher (13).

13. Procédé de localisation selon l'une quelconque des revendications 10 à 12 comprenant : la détermination d'une intensité de signal du dispositif électronique à rechercher (13) dans la plage de balayage du premier dispositif électronique (11) ; et la détermination, sur la base d'une première caractéristique de changement qui appartient à l'intensité de signal et qui se situe dans une période de temps prédéfinie, d'une seconde caractéristique de changement de la distance entre le premier dispositif électronique (11) et le dispositif électronique à rechercher (13).

14. Dispositif électronique (11), comportant un processeur (1102) et une mémoire (1101), dans lequel la mémoire (1101) est configurée pour stocker des instructions, et le processeur (1102) est configuré pour invoquer les instructions dans la mémoire (1101), pour permettre au premier dispositif électronique (11) d'effectuer le procédé de localisation selon l'une quelconque des revendications 10 à 13.

15. Support de stockage lisible par ordinateur, comprenant des instructions informatiques, dans lequel, lorsque les instructions informatiques sont exécutées sur un dispositif électronique (11), le dispositif électronique (11) est activé pour effectuer le procédé de localisation selon l'une quelconque des revendications 10 à 13.

100

FIG. 1

FIG. 2

| Send an instruction for assisting in searching to a control center | S31 |

| Receive a searching response to a second electronic device sent by the control center | S32 |

| Determine, based on a scanning result, location information of a to-be-searched-for electronic device | S33 |

FIG. 3

11

**First electronic device**

| Memory | 1101 | Processor | 1102 |

1105

| Input module | Bluetooth module |
1104 — 1103

| Output module | Communication module |
1107 — 1106

FIG. 4

13

To-be-searched-for electronic device

1304

1301

Memory

1302

Processor

Bluetooth module

1303

FIG. 5

20

Control device

2004

2001

Memory

2002

Processor

Communication module

2003

FIG. 6

**EP 4 354 907 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020081265 A1
- CN 110460981 A
- CN 112312319 A
- US 2021029496 A1